# EUROPÄISCHE PATENTANMELDUNG

(11) **EP 2 827 006 A1**
(43) Veröffentlichungstag der Anmeldung: **21.01.2015**
(21) Anmeldenummer: 14164945.9
(22) Anmeldetag: 16.04.2014
(51) Int. Cl.: F16B 19/10

(54) **Blindnietsystem**

(30) Priorität: 13.05.2013 DE 102013208695
(71) Anmelder: Schaeffler Technologies GmbH & Co. KG, 91074 Herzogenaurach (DE)
(72) Erfinder: Michelbach, Thomas, 76437 Rastatt (DE)

(57) **Zusammenfassung**

Die Erfindung betrifft ein Blindnietsystem (10) zur form- und kraftschlüssigen Verbindung zweier Komponenten, aufweisend einen Ziehdorn, einen Hohlniet (20), eine Nietmutter (25) und eine Längsachse (30), wobei der Ziehdorn einen Außengewindeabschnitt (40) und einen Ziehdornkopf (35) umfasst, wobei der Ziehdornkopf eine umfangsseitig angeordnete Aufweitungskontur (45) umfasst, wobei die Nietmutter einen Innengewindeabschnitt (60) umfasst, wobei der Innengewindeabschnitt korrespondierend zum Außengewindeabschnitt des Ziehdorns ausgebildet ist und in Eingriff mit dem Außengewindeabschnitt steht, wobei die Nietmutter gegenüber dem Ziehdorn um die Längsachse verdrehbar ist, wobei der Hohlniet eine Durchgangsbohrung (50) zur zumindest teilweisen Aufnahme des Außengewindeabschnitts des Ziehdorns umfasst, wobei der Hohlniet zwischen dem Ziehdornkopf und der Nietmutter zumindest teilweise angeordnet ist, wobei die Nietmutter den Hohlniet durch das Verdrehen der Nietmutter gegenüber dem Ziehdorn verspannt und der Ziehdornkopf bei der Verspannung den Hohlniet mittels der Aufweitungskontur zumindest teilweise in radialer Richtung zur Längsachse aufweitet.

## Beschreibung

Die Erfindung betrifft ein Blindnietsystem zur form- und kraftschlüssigen Verbindung zweier Komponenten gemäß Patentanspruch 1.

Aus der WO 2011/057705 A1 ist ein Kupplungsaggregat für einen Drehmomentwandler mit einem Gehäuse, einem mit einer Bohrung versehenen Kolbenblech und einem in der Bohrung angeordneten Niet bekannt, wobei der Niet einen Nietkopf aufweist. Vor der Beaufschlagung des Niets mit Druck zur Befestigung des Niets am Kolbenblech wird der Niet zwischen dem Kolbenblech und dem Gehäuse verklemmt. Ein Kupplungsaggregat für einen Drehmomentwandler weist ein mit einer Bohrung versehenes Kolbenblech und eine Blattfeder auf, die ein fest am Gehäuse befestigtes erstes Ende und ein zweites Ende aufweist. Der Niet verbindet das zweite Ende der Blattfeder mit dem Kolbenblech. Der Niet weist ein zwischen dem zweiten Ende der Blattfeder und dem Gehäuse angeordneten Nietkopf und einen in der Bohrung des Kolbenblechs angeordneten Nietschaft auf. Das Kolbenblech oder das Gehäuse ist in der Weise auslenkbar, dass der Nietkopf vor der Verformung des Schafts in die Breite zwischen dem Gehäuse und dem Kolbenblech verklemmbar ist.

Es ist Aufgabe der Erfindung, ein verbessertes Blindnietsystem bereitzustellen.

Diese Aufgabe wird mittels der Merkmale des Patentanspruchs 1 gelöst. Vorteilhafte Ausführungsformen sind in den abhängigen Ansprüchen angegeben.

Erfindungsgemäß wurde erkannt, dass ein verbessertes Blindnietsystem zur form- und kraftschlüssigen Verbindung zweier Komponenten dadurch bereitgestellt werden kann, dass das Blindnietsystem einen Ziehdorn, einen Hohlniet, eine Nietmutter und eine Längsachse aufweist. Der Ziehdorn umfasst einen Außengewindeabschnitt und einen Ziehdornkopf. Der Ziehdornkopf weist eine umfangsseitig angeordnete Aufweitungskontur auf. Die Nietmutter weist einen Innengewindeabschnitt auf. Der Innengewindeabschnitt der Nietmutter ist korrespondierend zum Außengewindeabschnitt des Ziehdorns ausgebildet und steht in Eingriff mit dem Außengewindeabschnitt. Ferner ist die Nietmutter gegenüber dem Ziehdorn um die Längsachse verdrehbar. Der Hohlniet umfasst eine Durchgangsbohrung zur teilweisen Aufnahme des Außengewindeabschnitts des Ziehdorns. Der Hohlniet ist zumindest teilweise zwischen dem Ziehdornkopf und der Nietmutter angeordnet. Die Nietmutter verspannt den Hohlniet durch das Verdrehen der Nietmutter gegenüber dem Ziehdorn und der Ziehdornkopf weitet bei der Verspannung den Hohlniet mittels der Aufweitungskontur zumindest teilweise in radialer Richtung zur Längsachse auf.

Diese Ausgestaltung hat den Vorteil, dass die beiden Komponenten sowohl kraft- als auch formschlüssig über das Blindnietsystem verbunden sind und somit sowohl Zug- als auch Torsions- und Scherkräfte über das Blindnietsystem zwischen den beiden Komponenten übertragen werden können. Ferner kann das Blindnietsystem von nur einer Seite der beiden Komponenten montiert werden, so dass an der anderen gegenüberliegenden Seite der Komponenten kein weiterer Bauraumbedarf für einen Zugang eines zur Montage des Blindnietsystems notwendigen Werkzeugs vorgesehen werden muss. Ferner können über das Blindnietsystem unterschiedliche Materialien der Komponenten zuverlässig miteinander verbunden werden.

In einer weiteren Ausführungsform ist umfangsseitig am Ziehdornkopf wenigstens ein Fixierungsmittel vorgesehen, das ausgebildet ist, bei dem Verspannen des Hohlniets in Wirkverbindung mit der Bohrung des Hohlniets zu treten, um ein Mitdrehen des Ziehdorns bei einem Verdrehen der Nietmutter zu minimieren. Auf diese Weise kann der Ziehdorn gezielt zu dem Hohlniet ausgerichtet werden.

Besonders vorteilhaft ist hierbei, wenn das Fixierungsmittel wenigstens eine Lamelle und/oder eine Ausbuchtung umfasst.

Besonders gut kann das Drehmoment am Hohlniet abgestützt werden, wenn das Fixierungsmittel in Längsrichtung an den Ziehdornkopf verlaufend ausgerichtet ist.

In einer weiteren Ausführungsform weist die Bohrung des Hohlniets einen Bohrungsdurchmesser und der Ziehdornkopf an einem dem Außengewindeabschnitt zugewandten ersten Längsende des Ziehdornkopfs einen Minimaldurchmesser und an einem dem ersten Längsende gegenüberliegenden zweiten Längsende des Ziehdornkopfs einen Maximaldurchmesser auf. Der Minimaldurchmesser ist dabei kleiner als der Bohrungsdurchmesser und der Maximaldurchmesser ist dabei größer als der Bohrungsdurchmesser, so dass bei dem Verspannen des Hohlniets die Aufweitungskontur des Ziehdornkopfs in die Bohrung eindringt und den Hohlniet in radialer Richtung zur Längsachse aufweitet. Auf diese Weise wird ein Verklemmen des Ziehdornkopfs beim Verspannen des Hohlniets an dem dem Ziehdornkopf zugewandten Längsende des Hohlniets zuverlässig vermieden. Dadurch kann eine höhere Fertigungszuverlässigkeit für das Blindnietsystem gewährleistet werden.

In einer weiteren Ausführungsform weist der Hohlniet an der Bohrung einen Außendurchmesser auf, wobei der Außendurchmesser größer oder gleich dem Maximaldurchmesser des Ziehdornkopfs ist. Auf diese Weise wird gewährleistet, dass das Blindnietsystem einen besonders geringen Durchmesser aufweist und gleichzeitig ein Verkanten des Blindnietsystems beim Einschieben in eine Öffnung zur Verbindung der beiden Komponenten erleichtert ist.

In einer weiteren Ausführungsform weist die Nietmutter einen Aufweitungsabschnitt auf, wobei der Aufweitungsabschnitt der Nietmutter an einem dem Hohlniet zugewandten Längsende der Nietmutter angeordnet ist, wobei der Aufweitungsabschnitt ausgebildet ist, bei der Verspannung des Hohlniets in die Bohrung des Hohlniets einzudringen und den Hohlniet auf einer dem Ziehdornkopf gegenüberliegenden Seite aufzuweiten. Auf diese Weise wird gewährleistet, dass die beiden Komponenten nur durch eine Zerstörung des Blindnietsystems voneinander getrennt werden können.

In einer weiteren Ausführungsform umfasst die Nietmutter umfangsseitig einen Befestigungsabschnitt mit wenigstens einer Anlagefläche. Die Anlagefläche ist ausgebildet, ein durch ein Werkzeug bereitgestelltes Drehmoment in die Nietmutter zur Verdrehung der Nietmutter gegenüber dem Ziehdorn und/oder gegenüber dem Hohlniet einzuleiten.

In einer weiteren Ausführungsform weist der Ziehdorn im Außengewindeabschnitt eine Sollbruchstelle auf, wobei die Sollbruchstelle ausgebildet ist, eine Abtrennposition des Außengewindeabschnitts vordefiniert festzulegen. Dadurch kann nach der Montage des Blindnietsystems ein überstehender Rest des Außengewindeabschnitts, der aus der Nietmutter in Längsrichtung herausragt, auf einfache Weise beispielsweise mit einer Zange durch Biegung oder durch Scherung abgetrennt werden. Dadurch wird die Längserstreckung des Blindnietsystems nach der Montage verkürzt.

In einer weiteren Ausführungsform weist der Hohlniet umfangsseitig wenigstens eine Abstützfläche auf, die ausgebildet ist, durch ein über die Nietmutter in den Hohlniet eingebrachtes Drehmoment aus dem Hohlniet ein an der Abstützfläche anordenbares weiteres Werkzeug abzustützen. Auf diese Weise wird gewährleistet, dass bei einem Verdrehen der Nietmutter gegenüber dem Hohlniet der Hohlniet in seiner Position ebenso nicht verdreht wird. Dadurch wird eine mögliche Beschädigung der beiden Komponenten beim Verspannen des Hohlniets vermieden.

Nachfolgend wird die Erfindung anhand von Figuren näher erläutert. Dabei zeigen:
- Fig. 1: eine schematische Schnittansicht durch ein Blindnietsystem gemäß einer ersten Ausführungsform in unverspanntem Zustand;
- Fig. 2: eine Draufsicht auf das in Fig. 1 gezeigte Blindnietsystem;
- Fig. 3: eine Schnittansicht durch das in Fig. 1 gezeigte Blindnietsystem in verspanntem Zustand;
- Fig. 4: eine Schnittansicht durch ein Blindnietsystem gemäß einer zweiten Ausführungsform in unverspanntem Zustand;
- Fig. 5: einen Ausschnitt der in Fig. 4 gezeigten Schnittansicht;
- Fig. 6: einen Längsschnitt durch einen Ziehdorn der in den Figuren 1 bis 5 gezeigten Blindnietsysteme; und
- Fig. 7: einen Querschnitt durch den in Fig. 6 gezeigten Ziehdorn entlang der in Fig. 6 gezeigten Schnittebene C-C.

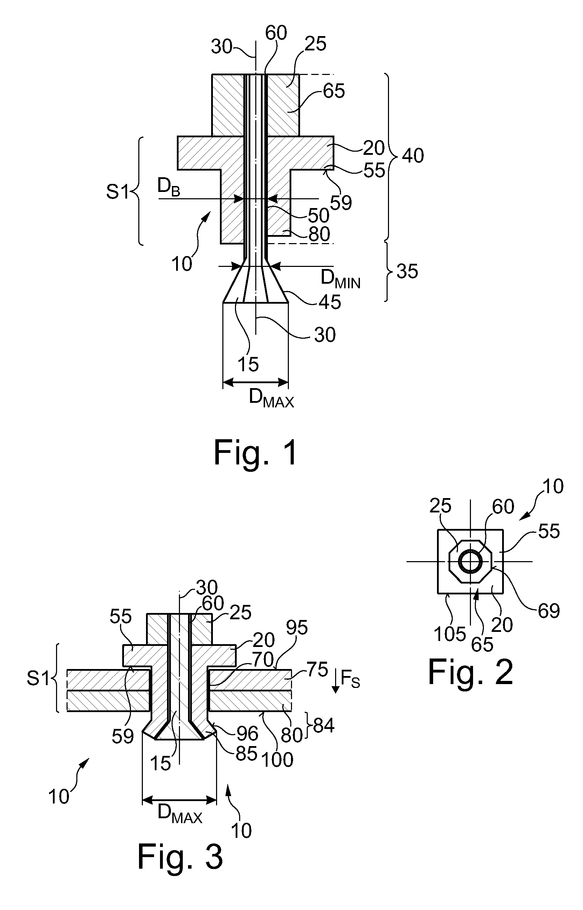

Nachfolgend werden gleiche Bauteile mit gleichen Bezugszeichen bezeichnet. Fig. 1 zeigt einen Längsschnitt durch ein Blindnietsystem 10 gemäß einer ersten Ausführungsform in unverspanntem Zustand. Fig. 2 zeigt eine Draufsicht auf das in Fig. 1 gezeigte Blindnietsystem 10. Fig. 3 zeigt einen Längsschnitt durch das in den Figuren 1 und 2 gezeigte Blindnietsystem 10 in verspanntem Zustand. Nachfolgend werden die Figuren 1 bis 3 gemeinsam erläutert.

Das Blindnietsystem 10 umfasst einen Ziehdorn 15, einen Hohlniet 20 und eine Nietmutter 25. Ferner weist das Blindnietsystem eine Längsachse 30 auf. Der Ziehdorn 15 weist einen Ziehdornkopf 35 auf, der an einem ersten Längsende des Ziehdorns 15 angeordnet ist. Ferner umfasst der Ziehdorn 15 einen Außengewindeabschnitt 40, der in der Ausführungsform angrenzend an den Ziehdornkopf 35 angeordnet ist. Selbstverständlich ist auch denkbar, dass ein weiterer Abschnitt zwischen dem Ziehdornkopf 35 und dem Außengewindeabschnitt 40 vorgesehen sein kann. Der Außengewindeabschnitt 40 ist beispielhaft als zylindrisches Gewinde ausgebildet. Der Ziehdornkopf 35 weist umfangsseitig eine Aufweitungskontur 45 auf. Die Aufweitungskontur 45 ist dabei konusartig ausgebildet. Die Aufweitungskontur 45 weist an einem Längsende des Ziehdornkopfs 35, das vom Außengewindeabschnitt 40 abgewandt ist, einen Maximaldurchmesser D_{MAX} und an einem zweiten Längsende des Ziehdornkopfs 35, das dem Außengewindeabschnitt 40 zugewandt ist, einen Minimaldurchmesser D_{MIN} auf. Der Maximaldurchmesser D_{MAX} ist dabei größer gewählt als der Minimaldurchmesser D_{MIN} des Ziehdornkopfs 35.

Der Hohlniet 20 weist eine entlang der Längsachse 30 verlaufende Bohrung 50 auf. Die Bohrung 50 weist in entspanntem Zustand (vgl. Fig. 1) ausschließlich einen zylindrischen Abschnitt 51 auf. Die Bohrung 50 weist dabei einen Bohrungsdurchmesser D_{B} auf, der größer ist als der Durchmesser des Außengewindeabschnitts 40 des Ziehdorns 15. Die Bohrung 50 erstreckt sich als Durchgangsbohrung dabei vollständig durch den Hohlniet 20. Der Hohlniet 20 ist zylindrisch ausgebildet. Ferner weist der Hohlniet 20 radial außenseitig einen umfangsseitig umlaufenden Kragen 55 auf, der an einem dem Ziehdornkopf 35 gegenüberliegenden Längsende des Hohlniets 20 angeordnet ist. Der Kragen 55 ist dabei in seinem Querschnitt (vgl. Fig. 2) rechteckförmig ausgebildet und weist auf einer der Nietmutter 25 abgewandten Stirnseite eine Kragenstirnfläche 59 auf.

Die Nietmutter 25 ist angrenzend an den Kragen 55 an dem Hohlniet 20 angeordnet. Die Nietmutter 25 weist einen entlang der Längsachse 30 verlaufenden Innengewindeabschnitt 60 auf. Der Innengewindeabschnitt 60 ist korrespondierend zum Außengewindeabschnitt 40 des Ziehdorns 15 ausgebildet. Die Nietmutter 25 umgreift umfangsseitig den Ziehdorn 15 an dem Außengewindeabschnitt 40. Dabei greift der Innengewindeabschnitt 60 der Nietmutter 25 in den Außengewindeabschnitt 40 ein. Der Innengewindeabschnitt 60 und der Außengewindeabschnitt 40 sind derartig aufeinander abgestimmt, dass die Nietmutter 25 durch eine Verdrehung gegenüber dem Ziehdorn um die Längsachse 30 in ihrer axialen Position veränderbar an dem Außengewindeabschnitt 40 ist. Um ein Drehmoment in die Nietmutter 25 einleiten zu können, weist die Nietmutter 25 umfangsseitig einen Befestigungsabschnitt 65 auf. Der Befestigungsabschnitt 65 ist sechseckförmig ausgebildet um von einem Werkzeug umfangsseitig regelmäßig angeordnete Werkzeuganlageflächen 69. Die Werkzeuganlagenflächen 69 sind dabei ausgebildet, von einem Maul- oder Ringschlüssel umfangsseitig umgriffen zu werden, um ein Drehmoment in die Nietmutter zur Verdrehung der Nietmutter gegenüber dem Ziehdorn 15 einleiten zu können. Selbstverständlich ist auch denkbar, dass der Befestigungsabschnitt 65 andersartig ausgebildet ist.

In entspanntem Zustand ist die Bohrung 50 vollständig zylindrisch ausgebildet und ist in keinem Bereich aufgeweitet. In diesem Zustand kann das Blindnietsystem 10 einfach durch eine sich überlappende Öffnung 70 durch zwei miteinander zu befestigende Komponenten 75, 80 axial geschoben werden. Wird die Nietmutter 25 gegenüber dem Ziehdorn 15 verdreht, so dass die Nietmutter 25 sich axial in Richtung des Ziehdornkopfs 35 bewegt, so wird der Hohlniet 20 in Richtung des Ziehdornkopfs 35 verschoben bis der Ziehdornkopf 35 in Berührkontakt mit dem Hohlniet tritt. Der Minimaldurchmesser D_{MIN} ist in der Ausführungsform kleiner als der Bohrungsdurchmesser D_{B} der Bohrung 50 gewählt. Wird die Nietmutter 25 weiter gegenüber dem Ziehdorn 15 verdreht, so dringt der Ziehdornkopf 35 in die Bohrung 50 ein. Die Aufweitkontur 45 drückt dabei das Material des Hohlniets 20 radial nach außen, so dass der zylindrische Abschnitt 51 des Hohlniets 20 in Längsrichtung reduziert wird und zusätzlich ein aufgeweiteter Abschnitt 84 mit Aufweitungskragen 85 entsteht. Die Aufweitungskragen 85 weisen einen Maximaldurchmesser D_{MAX H} auf, der größer ist als der Durchmesser der Öffnung 70 der Komponenten 75, 80. Dadurch wird vermieden, dass die Aufweitungskragen 85 bzw. der Hohlniet 20 wieder durch die Öffnung 70 gezogen werden kann. Die Nietmutter 25 wird dabei so lange gegenüber dem Nietdorn 15 verdreht, bis der Kragen 55 mit der Kragenstirnfläche 59, die senkrecht zur Längsachse 30 ausgerichtet ist und dem Ziehdornkopf 35 zugewandt ist, an einer Oberseite 95 der ersten Komponente 75 anliegt und gleichzeitig die Aufweitungskragen 85 so weit aufgeweitet sind, bis der Hohlniet 20 axial in Richtung der Längsachse in der Öffnung 70 nicht mehr verschiebbar ist und eine äußere Umfangsfläche 96 des Aufweitungskragens 85 in Berührkontakt mit der Öffnung 70 tritt.

Die oben beschriebene Ausgestaltung des Blindnietsystems 10 hat den Vorteil, dass durch die Nietmutter 25 und den Nietdorn 15 zusätzlich zu der Vernietung der beiden Komponenten 75, 80 über die Aufweitung des Hohlniets 20 eine Spannkraft F_{S} in die beiden Komponenten 75, 80 eingebracht werden kann und die beiden Komponenten 75, 80 zusätzlich miteinander verspannt werden. Dies hat den Vorteil, dass die beiden Komponenten sowohl auf Druck, Zug, Scherung und/oder Torsion belastet werden können, ohne dass das Blindnietsystem 10 durch die Belastung beschädigt wird oder sich die Komponenten 75, 80 voneinander lösen könnten. Zusätzlich sichert die Aufweitung des Hohlniets 20, also die Ausbildung einer Lochlaibung, dass selbst bei einer Schwingungsbelastung der beiden Komponenten 75, 80 zusammen mit dem Blindnietsystem 10 oder bei einem ungewünschten Lösen der Nietmutter 25 vom Blindnietsystem 10 das Blindnietsystem 10 nach wie vor die Komponenten 75, 80 zuverlässig miteinander verbindet. Das Verbleiben des Ziehdorns 15 im Blindniet 20 hat ferner den Vorteil, dass von der ersten Komponente 75 eine höhere Scherbelastung als über bekannte Nietsysteme über das oben beschriebene Blindnietsystem 10 auf die zweite Komponente 80 übertragen werden kann. Auch verhindert das Verbleiben des Ziehdorns 15 in dem Hohlniet 20 eine mögliche Verformung des Hohlniets 20 in Umfangsrichtung durch Bewegungen der Komponenten 75, 80 zueinander. Das Blindnietsystem 10 kann einseitig beispielsweise von der Oberseite 95 der ersten Komponente 75 her montiert werden, ohne dass von einer Unterseite 100 der zweiten Komponente 80 ein Zugang zu dem Blindnietsystem mit einem Werkzeug notwendig ist. Dadurch kann der Bauraum zwischen der zweiten Komponente 80 und weiteren nicht dargestellten Komponenten besonders knapp und gering gehalten werden.

Um das Blindnietsystem 10 zu montieren, wird das Blindnietsystem, wie in Fig. 1 gezeigt, in ungespanntem Zustand in die Öffnung 70 entlang der Längsachse 30 eingeschoben bis die Kragenstirnfläche 59 an der Oberseite 75 der ersten Komponente 75 anliegt. Ferner wird der Hohlniet 20 über eine umfangsseitig am Kragen 75 angeordnete Abstützfläche 105 mit einem ersten Werkzeug (nicht dargestellt) gehalten, um ein Drehmoment kommend aus dem Hohlniet 20 über das erste Werkzeug abzustützen. Ferner wird die Nietmutter 25 mit einem zweiten Werkzeug umfangsseitig umgriffen und über das zweite Werkzeug 25 und über die Werkzeuganlageflächen 69 des Befestigungsabschnitts 65 ein Drehmoment zur Verdrehung der Nietmutter 25 gegenüber dem Ziehdorn 15 in die Nietmutter 25 eingeleitet. Sodann wird die Nietmutter 25 so lange verdreht bzw. der Hohlniet 20 aufgeweitet und verspannt, bis der Aufweitungskragen 85 so weit aufgeweitet ist, dass eine axiale Verschiebung des Hohlniets 20 in der Öffnung 70 nicht mehr möglich ist. Dies kann alternativ auch durch eine Drehmomentsteuerung des zweiten Werkzeugs erfolgen.

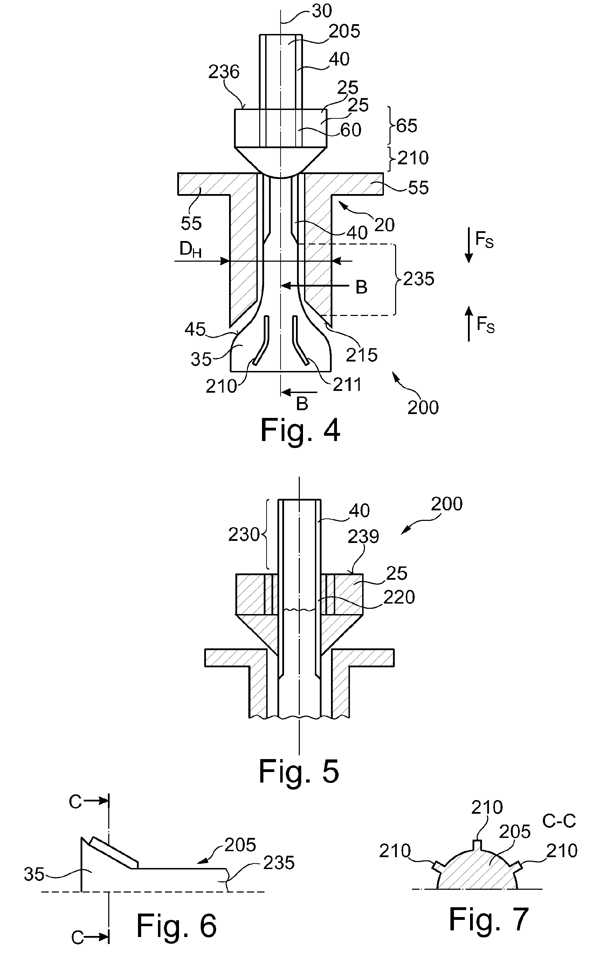

Fig. 4 zeigt einen Längsschnitt durch ein Blindnietsystem 200 gemäß einer zweiten Ausführungsform. Fig. 5 zeigt eine vergrößerte Ansicht des in Fig. 4 gezeigten Blindnietsystems 200. Fig. 6 zeigt einen Längsschnitt durch den Ziehdorn 205 entlang einer in Fig. 4 gezeigten Schnittebene B-B und Fig. 7 zeigt einen Querschnitt durch den in Fig. 6 gezeigten Ziehdorn 205 entlang einer in Fig. 6 gezeigten Schnittebene C-C. Nachfolgend sollen die Figuren 4 bis 7 gemeinsam erläutert werden.

Das Blindnietsystem 200 ist im Wesentlichen identisch zu dem in den Figuren 1 bis 3 gezeigten Blindnietsystem ausgebildet. Ebenso entspricht die Funktionsweise im Wesentlichen dem in Fig. 1 bis 3 gezeigten Blindnietsystem 10. Zusätzlich weist das Blindnietsystem 200 an der Nietmutter 25 einen Aufweitungsabschnitt 210 auf, der konusartig, ähnlich dem Ziehdornkopf 35, ausgebildet ist. Der Aufweitungsabschnitt 210 dringt ebenso wie der Ziehdornkopf 35 bei einem Verspannen des Hohlniets 20 in die Bohrung 50 des Hohlniets 20 ein und weitet den Hohlniet 20 auf einer dem Ziehdornkopf 35 gegenüberliegenden Längsseite des Hohlniets 20 bzw. an der Längsseite, an der der Kragen 55 angeordnet ist, auf. Dadurch kann die Spannkraft F_{S} beidseitig in den Hohlniet 20 eingebracht werden. Ferner wird ein Lösen der Nietmutter 25 von dem Ziehdorn 205 durch die plastische Verformung des Längsendes des Hohlniets 20 im Bereich des Aufweitungsabschnitts 210 zusätzlich vermieden. Dadurch kann auf zusätzliche Schraubensicherungsmittel, die in den Innengewindeabschnitt 60 der Nietmutter 25 bzw. in den Außengewindeabschnitt 40 des Ziehdorns 205 eingebracht werden, verzichtet werden.

Ferner ist zwischen der Aufweitungskontur 45 und dem Außengewindeabschnitt 40 ein Schaftabschnitt 235 vorgesehen ist, der den Außengewindeabschnitt 40 von dem Ziehdornkopf 35 axial trennt. Auf diese Weise kann der Ziehdorn 205 kostengünstig an die Länge des Hohlniets 20 angepasst werden.

Um in der Montage des Blindnietsystems 200 ein Verdrehen des Ziehdorns 205 gegenüber dem Hohlniet 20 zu vermeiden, sind an dem Ziehdorn 205 umfangsseitig an dem Ziehdornkopf 35 mehrere Lamellen 210 vorgesehen. Wird das Blindnietsystem 205 verspannt, so dringen die Lamellen 210 in das Material des Hohlniets 200 innenseitig ein. Die Lamellen 210 sind in der Ausführungsform im Wesentlichen in der Längsrichtung, also parallel zur Längsachse an der Umfangsseite des Ziehdornkopfs 35 bzw. an der Aufweitungskontur 45 angeordnet. Wird beim Verschrauben des Innengewindeabschnitts 60 an dem Außengewindeabschnitt 40 des Ziehdorns 205 ein Drehmoment von der Nietmutter 25 in den Ziehdorn 205 durch die Reibung im den jeweiligen Gewindeabschnitten 40, 60 eingebracht, so wird dieses in den Ziehdorn 205 eingebrachte Drehmoment über die Lamellen 210 in den Hohlniet 20 weitergeleitet. Das weitergeleitete Drehmoment kann dann über die Abstützfläche 105 an dem Kragen 55 des Hohlniets 40 ferner weiter in das erste Werkzeug eingeleitet werden und durch dieses abgestützt werden. Dies sorgt dafür, dass der Hohlniet 20 bzw. der Ziehdorn 205 sich bei der Montage nicht verdrehen. Dadurch kann eine vordefinierte Ausrichtung des Ziehdorns 205 gewährleistet werden. Ferner sind zusätzlich neben der zylindrischen Ausgestaltung des Hohlniets 20 bzw. des Ziehdorns 205 auch andersartige Querschnittsformen, beispielsweise rechteckförmig, polygonförmig oder elliptisch denkbar, die an die Geometrie der Öffnung 70 der beiden Komponenten 75, 80 angepasst ist.

Die Lamellen 210 sind in der Ausführungsform wie in Fig. 7 gezeigt rechteckförmig ausgebildet. Selbstverständlich ist auch denkbar, dass die Lamellen 210 auch einen andersartigen Querschnitt, beispielsweise einen quadratischen, polygonförmigen oder elliptischen Querschnitt aufweisen. Auch ist die Anzahl der an dem Ziehdornkopf 35 angeordneten Lamellen 210 je nach eingeleitetem Drehmoment in ihrer Anzahl und auch in ihrer Ausrichtung variabel. Auch ist denkbar, dass die Lamellen 210 schräg oder gewindeartig an dem Ziehdornkopf 35 angeordnet sind. Dies würde für eine zusätzliche Verschraubung des Ziehdornkopfs 35 an dem Hohlniet 20 sorgen und gleichzeitig eine Abstützung des Drehmoments aus der Nietmutter 25 bewirken.

Um das Eindringen des Ziehdornkopfs 35 in die Bohrung 50 des Hohlniets 20 zu erleichtern, ist eine Stirnseite 215 des Hohlniets 20 abweichend zu der in der Fig. 1 und 2 gezeigten senkrechten Anordnung der Stirnseite 215 schräg bzw. konusartig ausgebildet. Die Stirnseite 215 ist dabei korrespondierend an die konusartige Ausgestaltung der Aufweitkontur 45 des Ziehdornkopfs 35 angepasst. Beim Verspannen des Hohlniets 20 wird der Hohlniet 20 durch die konusartige Stirnseite 215 leichter gegenüber der in Figur 3 senkrecht zur Drehachse angeordneten Stirnseite 215 aufgeweitet. Dadurch können die Montagekräfte zur Montage des Blindnietsystems 200 reduziert werden. Auch können dadurch die zur Montage notwendigen Werkzeuge, insbesondere wenn das erste Werkzeug elektrisch, pneumatisch oder hydraulisch angetrieben wird, leichter und kleiner ausgebildet sein.

Um die axiale Länge des Blindnietsystems 200 nach dem Verspannen des Blindnietsystems 200 an den Komponenten 75, 80 zu reduzieren, weist der Außengewindeabschnitt 40 eine Sollbruchstelle 220 auf. Nach dem Verschrauben der Nietmutter 25 an dem Ziehdorn 205 ragt oberhalb der Nietmutter 25 ein Teilabschnitt 230 aus der Nietmutter 25 heraus. Die Sollbruchstelle 220 ist vorteilhafterweise derartig im Außengewindeabschnitt 40 angeordnet, dass die Sollbruchstelle 220 auf Höhe einer Oberseite 236 der Nietmutter 25 abschließt. Der Teilabschnitt 230 kann nach dem Verspannen des Blindnietsystems 200 durch ein drittes Werkzeug, beispielsweise eine Zange, durch das Einbringen einer Biegespannung oder einer Scherspannung in den Teilabschnitt 230 von dem Ziehdorn 205 abgelöst werden. Dadurch weist das Blindnietsystem 200 in montiertem Zustand eine besonders kompakte axiale Erstreckung auf. Die längere Ausbildung des Außengewindeabschnitts 40 ermöglicht ein einfaches Aufschrauben der Nietmutter 25 an den Ziehdorn 205. Auch wird das Verspannen des Blindnietsystems 200 dadurch erleichtert. Besonders vorteilhaft ist hierbei, wenn die Sollbruchstelle ein bis zwei Gewindegänge oberhalb der Oberseite 236 der Nietmutter 25 in fertig montiertem Zustand angeordnet ist. Auf diese Weise wird gewährleistet, dass zuverlässig alle Verspannkräfte aus der Nietmutter 25 in den Außengewindeabschnitt 40 eingeleitet werden können.

Es wird darauf hingewiesen, dass die in den Figuren 1 bis 7 gezeigten Merkmale selbstverständlich untereinander kombiniert werden können. Auch ist denkbar, dass beispielsweise an dem Hohlniet 20 auf den Kragen 55 verzichtet wird. Auch kann auf die Lamellen 210 verzichtet werden. Alternativ zu den Lamellen 210 ist auch denkbar, die Lamellen 210 als Ausbuchtung aus dem Ziehdornkopf 35 auszubilden.

Es wird darauf hingewiesen, dass die gezeigte Kontur der Aufweitungskontur 45 bzw. des Aufweitungsabschnitts 210 beispielhaft ist. Selbstverständlich ist auch denkbar, dass anstatt der konusartig gezeigten Kontur andersartige Konturen, beispielsweise kreisförmige oder elliptische Konturen denkbar sind. Der Befestigungsabschnitt 65 ist in der Ausführungsform als Sechskant ausgebildet. Selbstverständlich ist auch denkbar, dass andersartige zur Drehmomenteinleitung bereits bekannte Ausgestaltungen wie Vierkant, Fünfkant, Dreikant, denkbar sind.

Zwar ist besonders von Vorteil, wenn der maximale Außendurchmesser D_{MAX} gleich groß wie ein Außendurchmesser D_{H} des Hohlniets 20 im zylindrischen Bereich ist, jedoch kann selbstverständlich auch davon abgewichen werden, so dass beispielsweise der Außendurchmesser D_{H} des Hohlniets 20 größer oder kleiner dem Maximaldurchmesser D_{MAX} des Ziehdornkopfs 35 ist.

### Bezugszeichenliste

- 10: Blindnietsystem
- 15: Ziehdorn
- 20: Hohlniet
- 25: Nietmutter
- 30: Längsachse
- 35: Ziehdornkopf
- 40: Außengewindeabschnitt
- 45: Aufweitungskontur
- 50: Bohrung
- 51: Zylindrischer Abschnitt
- 55: Kragen
- 59: Kragenanlagefläche
- 60: Innengewinde
- 65: Befestigungsabschnitt
- 69: Werkzeuganlagefläche
- 70: Anlagefläche
- 75: Erste Komponente
- 80: Zweite Komponente
- 81: Aufgeweiteter Abschnitt
- 85: Aufweitungskragen
- 90: Kragenstirnfläche
- 95: Oberseite der ersten Komponente
- 100: Unterseite der zweiten Komponente
- 105: Abstützfläche
- 200: Blindnietsystem
- 205: Ziehdorn
- 210: Aufweitungsabschnitt
- 211: Lamelle
- 215: Stirnseite
- 220: Sollbruchstelle
- 230: Teilabschnitt
- 235: Schaftabschnitt
- 236: Oberseite der Nietmutter

## Patentansprüche

1. Blindnietsystem (10, 200) zur form- und kraftschlüssigen Verbindung zweiter Komponenten, aufweisend einen Ziehdorn, einen Hohlniet (20), eine Nietmutter (25) und eine Längsachse (30)
- wobei der Ziehdorn (15; 205) einen Außengewindeabschnitt (40) und einen Ziehdornkopf (35) umfasst,
- wobei der Ziehdornkopf (35) eine umfangsseitig angeordnete Aufweitungskontur (45) umfasst,
- wobei die Nietmutter (25) einen Innengewindeabschnitt (60) umfasst,
- wobei der Innengewindeabschnitt (60) korrespondierend zum Außengewindeabschnitt (40) des Ziehdorns (15; 205) ausgebildet ist und in Eingriff mit dem Außengewindeabschnitt (40) steht,
- wobei die Nietmutter (25) gegenüber dem Ziehdorn (15; 205) um die Längsachse (30) verdrehbar ist,
- wobei der Hohlniet (20) eine Durchgangsbohrung (50) zur zumindest teilweisen Aufnahme des Außengewindeabschnitts (40) des Ziehdorns (15; 205) umfasst,
- wobei der Hohlniet (20) zwischen dem Ziehdornkopf (35) und der Nietmutter (25) zumindest teilweise angeordnet ist,
- wobei die Nietmutter (25) den Hohlniet (20) durch das Verdrehen der Nietmutter (25) gegenüber dem Ziehdorn (15; 205) verspannt und der Ziehdornkopf (35) bei der Verspannung den Hohlniet (20) mittels der Aufweitungskontur (45) zumindest teilweise in radialer Richtung zur Längsachse (30) aufweitet.

2. Blindnietsystem (10, 200) nach Anspruch 1, wobei umfangsseitig am Ziehdornkopf (35) wenigstens ein Fixierungsmittel (211) vorgesehen ist, das ausgebildet ist, bei dem Verspannen des Hohlniets (20) in Wirkverbindung mit der Bohrung (50) des Hohlniets (20) zu treten, um ein Mitdrehen des Ziehdorns (15; 205) bei einem Verdrehen der Nietmutter (25) zu minimieren.

3. Blindnietsystem (10, 200) nach Anspruch 1, wobei das Fixierungsmittel wenigstens eine Lamelle (211) und/oder eine Ausbuchtung umfasst.

4. Blindnietsystem (10, 200) nach Anspruch 2 oder 3, wobei das Fixierungsmittel (211) in Längsrichtung ausgerichtet ist.

5. Blindnietsystem (10, 200) nach einem der Ansprüche 1 bis 4, wobei die Bohrung (50) des Hohlniets (20) einen Bohrungsdurchmesser und der Ziehdornkopf (35) an einem dem Außengewindeabschnitt (40) zugewandten ersten Längsende des Ziehdornkopfs (35) einen Minimaldurchmesser und an einem dem ersten Längsende gegenüberliegenden zweiten Längsende des Ziehdornkopfs (35) einen Maximaldurchmesser aufweist, wobei der Minimaldurchmesser kleiner als der Bohrungsdurchmesser und der Maximaldurchmesser größer als der Bohrungsdurchmesser ist, so dass bei dem Verspannen des Hohlniets (20) die Aufweitungskontur (45) des Ziehdornkopfs (35) in die Bohrung (50) eindringt und den Hohlniet (20) in radialer Richtung zur Längsachse (30) aufweitet.

6. Blindnietsystem (10, 200) nach Anspruch 5, **dadurch gekennzeichnet, dass** der Hohlniet (20) an der Bohrung (50) einen Außendurchmesser (D_{H}) aufweist, wobei der Außendurchmesser größer oder gleich dem Maximaldurchmessers (D_{MAX}) des Ziehdornkopfs (35) ist.

7. Blindnietsystem (10, 200) nach einem der Ansprüche 1 bis 6, wobei die Nietmutter (25) einen Aufweitungsabschnitt (210) umfasst, wobei der Aufweitungsabschnitt (210) der Nietmutter (25) an einem dem Hohlniet (20) zugewandten Längsende der Nietmutter (25) angeordnet ist, wobei der Aufweitungsabschnitt (210) ausgebildet ist, bei der Verspannung des Hohlniets (20) in die Bohrung (50) des Hohlniets (20) einzudringen und den Hohlniet (20) auf einer dem Ziehdornkopf (35) gegenüberliegenden Seite aufzuweiten.

8. Blindnietsystem (10, 200) nach einem der Ansprüche 1 bis 7, wobei die Nietmutter (25) umfangsseitig einen Befestigungsabschnitt (65) mit wenigstens einer Anlagefläche (69) aufweist, die ausgebildet ist, ein durch ein Werkzeug bereitgestelltes Drehmoment in die Nietmutter (25) zur Verdrehung der Nietmutter (25) gegenüber dem Ziehdorn (15; 205) und/oder gegenüber dem Hohlniet (20) einzuleiten.

9. Blindnietsystem (10, 200) nach einem der Ansprüche 1 bis 8, wobei der Ziehdorn (15; 205) im Außengewindeabschnitt (40) eine Sollbruchstelle (220) umfasst, wobei die Sollbruchstelle (220) ausgebildet ist, eine Abtrennposition eines Teilabschnitts (230) des Außengewindeabschnitts (40) vordefiniert festzulegen.

10. Blindnietsystem (10, 200) nach einem der Ansprüche 1 bis 9, wobei der Hohlniet (20) umfangsseitig wenigstens eine Abstützfläche (105) aufweist, die ausgebildet ist, durch ein über die Nietmutter (25) in den Hohlniet (20) eingebrachtes Drehmoment aus dem Hohlniet (20) ein an der Abstützfläche (105) anordenbares weiteres Werkzeug abzustützen.
